(19) Europäisches Patentamt
European Patent Office
Office européen des brevets

(11) Veröffentlichungsnummer: **0 047 370**
**B1**

# (12) EUROPÄISCHE PATENTSCHRIFT

(45) Veröffentlichungstag der Patentschrift: **17.08.83**

(51) Int. Cl.[3]: **E 21 B 43/22**

(21) Anmeldenummer: **81105345.3**

(22) Anmeldetag: **09.07.81**

## (54) Verfahren zur Gewinnung von Öl aus einer unterirdischen Lagerstätte.

(30) Priorität: **10.09.80 DE 3033926**

(43) Veröffentlichungstag der Anmeldung:
**17.03.82 Patentblatt 82/11**

(45) Bekanntmachung des Hinweises auf die Patenterteilung:
**17.08.83 Patentblatt 83/33**

(84) Benannte Vertragsstaaten:
**AT BE FR GB IT NL**

(56) Entgegenhaltungen:
**DE-A-2 418 444**
**US-A-4 016 932**
**US-A-4 110 228**
**TENSIDE DETERGENTS, Band 16, Nr. 5, 1979 MÜNCHEN (DE) D. BALZER et al »Die Phasen-Inversions-Temperatur als Auswahlkriterium für Tenside bei der tertiären Erdölgewinnung« Seiten 256–261**
**TENSIDE DETERGENTS, Band 14, Nr. 5, 1977 MÜNCHEN (DE) H. STACHE et al »Carboxymethylierte Oxäthylate als Tenside für die tertiäre Erdölgewinnung«, Seiten 237–239**

(73) Patentinhaber: **CHEMISCHE WERKE HÜLS AG, - RSP Patente / PB 15 - Postfach 13 20, D-4370 Marl 1 (DE)**

(72) Erfinder: **Balzer, Dieter, Dr., Griesheimer Strasse 18, D-4370 Marl (DE)**
Erfinder: **Kosswig, Kurt, Dr., Hoechster Strasse 10, D-4370 Marl (DE)**

**EP 0 047 370 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Gewinnung von Öl aus einer unterirdischen Lagerstätte

Bei der Gewinnung von Öl aus ölführenden Lagerstätten gelingt es im allgemeinen nur, einen Bruchteil des ursprünglich vorhandenen Öls durch primäre Gewinnungsverfahren zu fördern. Hierbei gelangt das Öl infolge des naütrlichen Lagerstättendrucks an die Erdoberfläche. Bei der sekundären Ölgewinnung wird Wasser in einer oder mehrere Injektionsbohrungen der Formation eingepreßt und das Öl zu einer oder mehreren Produktionsbohrungen getrieben und sodann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärtige Ölverknappung volkswirtschaftlich dringend erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als Insitu-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Tensidflutprozesse — je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten — beruhen in erster Linie auf einer starken Erniedrigung der Grenzflächenspannung zwischen Öl und Flutwasser. In einigen Fällen jedoch, insbesondere in Gegenwart höherer Tensidkonzentrationen, entstehen Wasser-in-Öl-Dispersionen mit, verglichen zum Öl, deutlich erhöhter Viskosität, so daß hier das Tensidfluten auch auf eine Verkleinerung des Mobilitätsverhältnisses zielt, wodurch der Wirkungsgrad der Ölverdrängung erhöht wird. Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Tensidfluten. Als ölmobilisierende Tenside wurden bislang vor allem organische Sulfonate, wie Alkyl-, Alkylaryl- oder Petroleumsulfonate, beschrieben. Diese besitzen jedoch eine sehr niedrige Toleranzgrenze gegenüber der Salinität der Lagerstättengewässer. Bereits Salzkonzentrationen von 1000 ppm gelten als problematisch, wobei die Empfindlichkeit dieser Tenside gegenüber Erdalkaliionen besonders ausgeprägt ist. Hier wird als obere kritische Grenzkonzentration ca. 500 ppm angenommen (US-PS 4 110 228). In Gegenwart höherer Salzkonzentrationen bilden sich bei Einsatz dieser Tenside Fällungsprodukte, die zu Verstopfungen der Formation führen können. Da jedoch viele Lagerstättenwässer wesentlich höhere Salinitäten besitzen, z. B. in Norddeutschland bis zu 250 000 ppm, hat man nach Wegen gesucht, die sonst gut ölmobilisierenden Eigenschaften der organischen Sulfonate auch für höher salinare Lagerstättensysteme nutzbar zu machen. Im Gemisch mit Cosurfactants, wie Alkoholen oder nichtionischen Tensiden, zeigten sich organische Sulfonate auch weniger elektrolytempfindlich, allerdings war dann meist auch die ölmobilisierende Wirkung verschlechtert.

Im Gegensatz zu dieser Substanzgruppe zeigen Alkyl- bzw. Alkylarylpolyglykolethersulfate oder carboximethylierte Alkyl- bzw. Alkylaryloxethylate eine gute Verträglichkeit selbst mit extrem hohen Salinitäten (z. B. 250 000 ppm) der Lagerstättenwässer. Da die ölmobilisierende Wirkung dieser Tenside gut (H. J. Neumann, DGMK BERICHTE, Bericht 164 [1978], D. Balzer und K. Kosswig, Tenside Detergents 16, 256 [1979]) sowie ihre Herstellung einfach und wirtschaftlich ist, sind diese Substanzklassen für den Einsatz bei der Ölverdrängung in mittel- und hochsalinaren Lagerstättensystemen (30 000 bis 250 000 ppm Gesamtsalzgehalt) sehr geeignet.

Bei zahlreichen Untersuchungen zur Restölmobilisierung von Modellformationen mit carboximethylierten Oxethylaten als Tensiden wurde jedoch beobachtet, daß der Transport der Ölbank durch die Formation von einem starken Druckanstieg begleitet wird. So wurden selbst bei relativ hochpermeablen künstlichen Formationen Druckgradienten bis zu etwa 40 bar/m beobachtet, die bei Übertragung in das Feld zu Drücken weit oberhalb des petrostatischen Drucks führen und damit den Einsatz dieser Tenside bei der tertiären Erdölgewinnung ausschließen würden. Auf Druckgradienten von ähnlicher Größenordnung wird auch in der Literatur hingewiesen (C. Marx, H. Murtada, M. Burkowsky, Erdoel Erdgas Zeitschrift 93, 303 [1977]). Die Autoren erklären die hohen Druckdifferenzen mit der Bildung von Emulsionszonen, die sich jedoch auf den Bereich der Flutfront beschränken sollen. Bei unseren Versuchen war allerdings eine lokale Begrenzung des Druckgradienten nicht zu erkennen. Und da Rohölemulsionen, stabilisiert durch carboximethylierte Oxethylate, strukturviskos sind, lassen sich die hohen Druckdifferenzen auch durch eine Herabsetzung der Flutgeschwindigkeit nicht beliebig

absenken. Folglich wäre beim Tensidfluten mit carboxymethylierten Oxethylaten im Feldversuch mit unbeherrschbar hohen Druckgradienten zu rechnen.

Es bestand daher die Aufgabe, für die gut ölmobilisierenden carboximethylierten Oxethylate eine Vorgehensweise des Tensidflutens zu finden, die nicht zu hohen Druckgradienten führt. Eine Erniedrigung des Druckgradienten ist dadurch möglich, daß durch geeignete Anpassung der Tensidmenge an die Lagerstätte ein stark verzögerter Tensiddurchbruch angestrebt wird. Allerdings setzt diese Verfahrensweise homogene Formationen voraus, wie sie zwar bei künstlichen Sandschüttungen, kaum jedoch bei eigentlichen Lagerstätten gegeben sind. Eine Lösung der Aufgabe wird daher auf diese Weise kaum möglich sein.

Diese Aufgabe wurde überraschend durch Verlassen einer auch in der Literatur belegten Arbeitshypothese gelöst, derzufolge eine wirksame Restentölung nur dann möglich ist, wenn die Bedingungen für das Vorliegen einer w/o-Emulsion möglichst während des gesamten Flutprozesses gegeben sind (U. Lepper, Erdoel Erdgas Zeitschrift 92, 426 [1976]). Nach D. Balzer und K. Kosswig, Tenside Detergents 16, 256 (1979), bedeutet dies, daß die Phasen-Inversions-Temperatur (PIT) des Systems Original-Rohöl und -Formationswasser sowie Tensid und gegebenenfalls Zusätze unterhalb der Lagerstättentemperatur liegen muß, und zwar bis zu 15°C. Bei unter diesen Bedingungen an Modellformationen durchgeführten Flutversuchen wurden gewöhnlich sehr wirksame Entölungen beobachtet, wobei das Rohöl ganz überwiegend emulsionsfrei ausgeflutet werden konnte. Jedoch treten bei dieser Arbeitsweise sehr häufig hohe Druckgradienten auf.

Es wurde nun gefunden, daß sich der Druckgradient bei guter Entölung um das 20- bis 100fache senken läßt durch ein Verfahren, wie es in den Patentansprüchen dargestellt ist. Dies war insofern äußerst überraschend, als der betreffende Temperaturbereich das Zustandsgebiet einer o/w-Emulsion ist.

Wählt man nämlich ein solches Tensid, das bezüglich des Lagerstättensystems eine PIT um 11°C und höher oberhalb der Lagerstättentemperatur besitzt, und befindet sich damit im Zustandsbereich der o/w-Emulsion, so ist die Mobilisierung des Restöls wenig wirksam, und das Öl wird ganz überwiegend als Emulsion gefördert.

Die PIT selbst wird mit Hilfe der Messung der elektrischen Leitfähigkeit bestimmt. Hierzu wird eine Emulsion, bestehend aus dem Rohöl und dem Formationswasser der betreffenden Lagerstätte (Phasenverhältnis 1 : 1) und dem Tensid (2%, bezogen auf die wäßrige Phase) sowie gegebenenfalls Zusätzen, hergestellt, und ihre elektrische Leitfähigkeit in Abhängigkeit von der Temperatur gemessen. Bei der PIT schlägt eine o/w-Emulsion in eine w/o-Emulsion um bzw. umgekehrt, wobei die elektrische Leitfähigkeit sprungartig sinkt bzw. steigt. Genau genommen ist dies ein Temperaturbereich von wenigen Grad C. Registriert als PIT wird die Temperatur, bei der die elektrische Leitfähigkeit den Mittelwert zwischen oberem (o/w) und unterem (w/o) Niveau erreicht.

Die vorliegende Erfindung bezieht sich auf den Einsatz von carboximethylierten Oxethylaten als ölmobilisierende Tenside. Man kann diese Verbindungen nach DE-PS 2 418 444 durch Umsetzung von Oxethylaten der Formel $R-(O-CH_2-CH_2)_nOH$ mit einem Salz der Chloressigsäure in Gegenwart von Alkalihydroxid oder Erdalkalihydroxid herstellen. Aber auch andere Herstellungsverfahren sind geeignet. R bedeutet hierbei einen gesättigten oder ungesättigten, geradkettigen oder verzweigten Alkylrest mit 4 bis 20, vorzugsweise 8 bis 16 C-Atomen oder einen Alkylarylrest mit 1 bis 14 C-Atomen im Alkylrest. n kann Werte zwischen 3 und 30, vorzugsweise zwischen 3 und 15, annehmen. Das Kation kann Natrium, Kalium, Lithium, Ammonium, Calcium oder Magnesium sein. Als Alkohole und Phenole, deren Oxethylate den Carboximethylaten zugrunde liegen, lassen sich z. B. einsetzen: Butylalkohol, Hexylalkohol, Octylalkohol, Nonylalkohol, Decylalkohol, Undecyl-, Lauryl-, Tridecyl-, Myristil-, Palmityl- und Stearylalkohol, aber auch ungesättigte Alkohole, wie z. B. Oleylalkohol. Die Alkylkette kann dabei normal- oder verzweigtkettig sein. Besonders zweckmäßig werden handelsübliche Gemische dieser Alkohole herangezogen. Als Alkylphenole lassen sich z. B. einsetzen: Kresol, Ethylphenol, Propylphenol, Butylphenol, Hexylphenol, Octylphenol, Nonylphenol, Decylphenol, Undecylphenol, Dodecylphenol, Tridecylphenol, Tetradecylphenol. Die Alkylkette kann normal- oder verzweigtkettig sein. Insbesondere lassen sich handelsübliche Gemische solcher Alkylphenole einsetzen.

Die Oxethylierung kann in Gegenwart katalytischer Mengen Alkalihydroxid mit 3 bis 30, vorzugsweise 3 bis 15 Mol Ethylenoxid durchgeführt werden. Die entstehenden Gemische haben annähernd eine Poisson-Verteilung.

Entsprechend ihrer Herstellung enthalten die carboximethylierten Oxethylate stets noch ansehnliche Mengen nicht umgesetztes Oxethylat. Mit der Formel $R-(OCH_2-CH_2)_n-OCH_2-COOM$ ist daher stets ein Gemisch mit unterschiedlichen Mengen an nicht umgesetztem Oxethylat gemeint. Demgemäß läßt sich ein Carboximethylierungsgrad definieren. Es hat sich gezeigt, daß Mischungen mit einem Carboximethylierungsgrad zwischen 10 und 90%, vorzugsweise zwischen 30 und 90%, das Öl wirksam zu verdrängen vermögen. Besonders wirksam sind Mischungen mit Carboximethylierungsgraden von 50 bis 85%. Mit der Angabe % sind stets Gewichtsprozente gemeint.

Die beschriebenen Mischungen aus anionischem und nichtionischem Tensid, carboximethylierte Oxethylate genannt, sind in üblichen Lagerstättenwässern löslich oder zumindest gut dispergierbar, wobei keinerlei Ausfällungen beobachtet werden.

Erfindungsgemäß geht man folgendermaßen vor: Bei Kenntnis der Lagerstättentemperatur bzw. gegebenenfalls eines Temperaturbereiches wird aus dem Rohöl, dem Formationswasser und gegebenenfalls dem Gas der Lagerstätte und einem geeignet scheinenden carboximethylierten Oxethylat der o. a. Formel orientierend die PIT gemessen. Diese Messung ist gegebenenfalls mit weiteren Tensiden dieser Klasse und gegebenenfalls Zusätzen zu wiederholen.

Auf der Basis der Meßergebnisse erfolgt das Maßschneidern des carboximethylierten Oxethylats, dessen ölmobilisierende Wirksamkeit für das betreffende Lagerstättensystem durch einen oder mehrere Vorversuche in einer Sandschüttung als Modellformation oder an Originalbohrkernen selbst verifiziert werden kann.

Die Natriumsalze der carboximethylierten Oxethylate, die durch Umsetzung von Oxethylaten mit Chloressigsäure bei Gegenwart von Natronlauge hergestellt werden, bieten mehrere Ansatzpunkte für die »Molekulararchitektur« mit dem Ziel, in einem bestimmten System eine gewünschte Phasen-Inversions-Temperatur einzustellen:

$$R-(OCH_2CH_2)_n-OH + ClCH_2COOH \xrightarrow[-NaCl-2H_2O]{+2NaOH} R-(OCH_2CH_2)_n-O-CH_2COONa$$

| R | n | Umsatz |
|---|---|---|
| variabel | variabel | variabel |

Die Salze der carboximethylierten Oxethylate setzen sich aus drei variablen Bausteinen zusammen: dem hydrophoben Rest R, der Oxethylatkette und der Carboximethylgruppe, deren Anteil in dem erhaltenen Produktgemisch durch Steuerung des Umsatzes des Ausgangsoxethylats mit Chloressigsäure in weiten Grenzen verändert werden kann.

Als Ausgangsstoffe für den hydrophoben Rest R kommen beispielsweise lineare und verzweigte (Fett)alkohole in Frage, ferner Alkylphenole mit beliebigen Alkylresten. Einen Eindruck von dem Einfluß des Alkylrestes auf die Phasen-Inversions-Temperatur in einem bestimmten System vermittelt die Tabelle 1.

Tabelle 1

Abhängigkeit der PIT von der Länge des Alkylrestes in den Natriumsalzen carboximethylierter Fettalkoholoxethylate mit 4,4 EO (4,4 Mole Ethylenoxyd/Mol) und bei einem Umsetzungsgrad von 65%; Rohöl A (s. D. Balzer und K. Kosswig, loc. cit.), Formationswasser A (s. D. Balzer und K. Kosswig, loc. cit.), Phasenverhältnis 1 : 1, 2% Tensid.

| C-Zahl im Alkylrest | PIT (° C) |
|---|---|
| 12 | 74 |
| 13*) | 53 |
| 14 | 41 |
| 16 | 37 |

*) 1 : 1-Mischung aus $C_{12}$ und $C_{14}$.

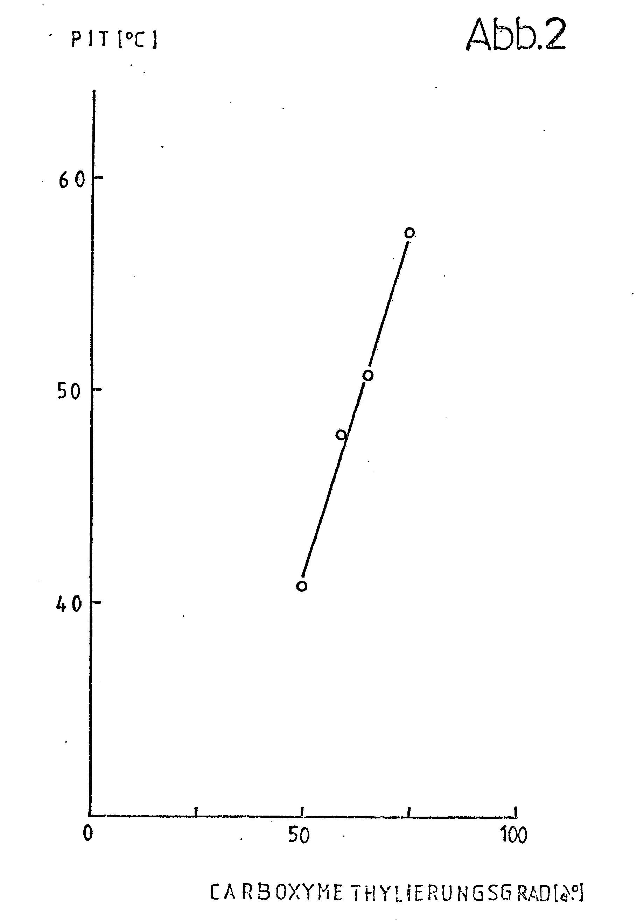

In den Abbildungen 1 und 2 sind die Abhängigkeiten der Phasen-Inversions-Temperatur in einem bestimmten System vom Oxethylierungsgrad und vom Umsatz bei der Carboximethylierung wiedergegeben. In beiden Fällen wurden Rohöl A und Formationswasser A im Phasenverhältnis 1 : 1 und 2% Tensid eingesetzt. In Abbildung 1 sind die Tenside zu 70% carboximethylierte Isononylphenoloxethylate verschiedenen Oxethylierungsgrades, in Abbildung 2 in verschiedenen Graden mit Chloressigsäure umgesetzte Isononylphenoloxethylate mit 5,5 EO.

Die Tabelle 1 und die Abbildungen 1 und 2 demonstrieren die Variabilität, die uns die Klasse der carboximethylierten Oxethylate, die letztlich Gemische aus ionischen und nichtionischen Tensiden darstellen, bietet bezüglich der Lagerstättenbedingungen.

Ferner können gegebenenfalls das Volumen der zu injizierenden Tensidlösung, ihre Konzentration und eventuelle Zusätze sowie ferner die Art und Größe der die Mobilität kontrollierenden Polymerlösung anhand von Modell-Flutversuchen optimiert werden. Aufgrund der Ergebnisse dieser Vorversuche wird die Tensidlösung mit Hilfe von Injektionspumpen in die Lagerstätte eingebracht. Hierbei kann die Tensidlösung entweder kontinuierlich oder in Form eines Slugs, d. h. eines eng begrenzten Volumens von 0,05 bis 4,0 PV (=Vielfaches des Porenvolumens der Lagerstätte) eingesetzt werden. Die Größe des Slugs richtet sich vor allem nach der Konzentration der Tensidlösung und nach der Wirtschaftlichkeit.

Zweckmäßigerweise geht dem Tensidfluten ein Wasserfluten voraus, wobei als Flutflüssigkeit das produzierte Formationswasser eingesetzt wird. Die Größe dieses Wasserslugs beträgt 0,01 bis 4 PV, vorzugsweise 0,05 bis 1,0 PV. Dem Tensidslug nachgeschaltet injiziert man zweckmäßigerweise sowohl aus Gründen der Mobilitätskontrolle als auch zum Schutz der Tensidlösung vor eindringendem Formationswasser einen Polymerslug in die Lagerstätte. Hierzu wird ein Polymer oder Polymergemisch in einer solchen Konzentration in dem Formationswasser gelöst, daß die Viskosität 4- bis 6mal so hoch ist wie die des Öls. Bei Lagerstätten mittlerer und höherer Salinität (3 bis 28%) kommen hier insbesondere Biopolymere, wie Polysaccharide oder Cellulosederivate, die in Gegenwart der erhöhten Salzkonzentration noch eine ausreichende Viskosität besitzen und keine Fällungen zeigen, in Frage.

Bei Formationswässern, die relativ arm an Erdalkaliionen sind, kann es sich als zweckmäßig erweisen, der Tensidlösung sowie dem vor- und nachgefluteten Formationswasser lösliche Erdalkalisalze zuzusetzen. Bei der Anpassung des Tensids an die Lagerstätte, d. h. also bei der Messung der PIT, müssen diese Zusätze berücksichtigt werden.

Zweckmäßigerweise schließt sich an das Injizieren der Polymerlösung normales Wasserfluten an. Dieses wird so lange fortgesetzt, wie sich wirtschaftlich Öl gewinnen läßt.

Die nachfolgenden Beispiele sollen das erfindungsgemäße Verfahren erläutern:

## Beispiel 1

Zur Herstellung einer künstlichen Formation wurde ein thermostatisierbares Hochdruckrohr von 70 cm Länge und 5 cm Durchmesser, versehen mit Temperaturmeßeinrichtung und Manometer, beidseitig verschließbar durch Gewindeverschlüsse mit Kapillareingang und Druckhalteventilausgang mit kantengerundetem Quarzsand beschickt. Sodann wurde die Sandschüttung mittels einer Hochdruckpumpe mit Formationswasser gesättigt und durch einen Thermostaten die gewünschte Temperatur eingestellt. Es folgten die Permeabilitätsmessung und anschließend die Rohölsättigung, wobei gleichzeitig der Haftwassergehalt bestimmt wurde. Nunmehr setzte das Wasserfluten mit einer Flutgeschwindigkeit von ca. 3 m/d ein. Nach Einfluten von ca. 1,5 PV Formationswasser, wobei ein Verwässerungsgrad von 98 bis 100% erzielt wurde, wurde das Tensid als Slug injiziert. Es folten als Slug die Polymerlösung (0,4 PV) und ca. 3,0 PV Formationswasser. Tensid-, Polymer- und das anschließende Nachfluten mit Formationswasser erfolgten mit einer Flutgeschwindigkeit von ca. 1 m/d.

Die Lagerstättentemperatur betrug 47° C, ihr Druck 60 bar, die Porosität der künstlichen Formation ca. 47%, ihre Permeabilität ca. 1200 mD und ihr Haftwassergehalt ca. 25%.

Das Formationswasser enthielt ca. 20% NaCl, 0,1% KCl, 1,2% $CaCl_2$ und 0,4% $MgCl_2$. Als Polymer diente Hydroxiethylcellulose (0,25%, gelöst in Formationswasser, Viskosität bei 25° C ca. 60 mPa · s). Als Rohöl wurde ein paraffinbasisches Öl mit $n_D^{20}$ 1,486, $d_{20}$ = 0,863 g/cm³ und $\eta_{20}$ 19 mPa · s verwendet.

Als Tensidlösung wurden 0,2 PV einer 6,6%igen Dispersion von carboximethyliertem Nonylphenoloxethylat mit 5,5 Mol Ethylenoxid/Mol in Formationswasser eingesetzt. Der Carboximethylierungsgrad betrug ca. 70%, die PIT der betreffenden Rohölemulsion 48° C.

Durch das Wasserfluten wurde eine Entölung von 75% erreicht, die sich nach weiteren 1,3 PV nach Beginn des Tensidflutens um 23% auf 98% Gesamtentölung steigern ließen. Während des Transportes der durch das Tensid erzeugten Ölbank wurde ein mittlerer Druckgradient von 0,6 bar/m gemessen.

## Beispiel 2 (Vergleichsbeispiel)

Bei praktisch identischen Bedingungen, Substanzen und Verfahrensschritten wie in Beispiel 1, jedoch bei einer eingestellten Lagerstättentemperatur von 56° C (PIT betrug wie im Beispiel 1 48° C) wurde dieses Vergleichsbeispiel durchgeführt. Durch Wasserfluten wurde eine Entölung von 73% erreicht, die nach weiteren 1,4 PV nach Beginn des Tensidflutens sich auf 99% Gesamtentölung steigern ließen. Jedoch wurde hierbei ein mittlerer Druckgradient von 41 bar/m gemessen.

Ein solcher Druckgradient würde bei Übertragung in das Feld zu Drücken weit oberhalb des

petrostatischen Druckes führen und damit den Einsatz der Tenside bei der tertiären Erdölförderung ausschließen.

Beispiel 3

Bei praktisch identischen Bedingungen, Substanzen und Verfahrensschritten wie im Vergleichsbeispiel 2 (Lagerstättentemperatur 56° C), jedoch mit einem carboximethylierten Nonylphenoloxethylat mit 5,9 Mol Ethylenoxid/Mol wurde dieses Beispiel durchgeführt. Die PIT betrug hierbei 58° C. Der Entölungsgrad nach dem Wasserfluten mit 75% ließt sich durch das Tensidfluten auf 99% erhöhen, wobei der mittlere Druckgradient einen Wert von 0,7 bar/m annahm.

Beispiel 4 (Vergleichsbeispiel)

Bei praktisch identischen Bedingungen, Substanzen und Verfahrensschritten wie im Beispiel 1, jedoch mit einem 0,4-PV-Tensidslug von carboximethyliertem Fettalkohol-($C_{12}-C_{14}$)-oxethylat mit 4,5 Mol Ethylenoxid/Mol, 5,5%ig dispergiert in Formationswasser (PIT 53° C) und einer Lagerstättentemperatur von 56° C wurde dieses Beispiel durchgeführt. Durch Wasserfluten wurde eine Entölung von 77% bewirkt, die sich nach weiteren 1,4 PV durch das Tensidfluten auf 99% steigern ließen. Der mittlere Druckgradient stieg hierbei auf 23 bar/m.

Beispiel 5

Dieses Beispiel wurde bei Bedingungen und Verfahrensschritten sowie mit Substanzen wie im Vergleichsbeispiel 4 (PIT 53° C) durchgeführt. Als Lagerstättentemperatur wurde jedoch hierbei ein Wert von 49° C eingestellt. Die Entölung durch Wasserfluten betrug 76%, die durch das folgende Tensidfluten weitere 22%. Gegenüber Vergleichsbeispiel 4 wurde hier ein mittlerer Druckgradient von nur 0,7 bar/m gemessen.

Beispiel 6 (Vergleichsbeispiel)

Bei praktisch identischen Bedingungen und Verfahrensschritten sowie mit Substanzen wie im Beispiel 3, jedoch bei einer Lagerstättentemperatur von 44° C (PIT 58° C, also 14° über Lagerstättentemperatur) wurde dieses Beispiel durchgeführt. Der Entölungsgrad nach dem Wasserfluten betrugt 77%. Durch das Tensid ließ er sich auf 94% steigern, wobei zunächst 10% des Tertiäröls emulsionsfrei und weitere 7% in Form einer o/w-Emulsion gefördert wurden. Der mittlere Druckgradient während des Transportes der Ölbank lag hier bei 0,6 bar/m.

**Patentansprüche**

1. Verfahren zur Gewinnung von weitgehend emulsionsfreiem Öl aus einer unterirdischen Lagerstätte mittlerer oder hoher Salinität durch Einpressen einer 1- bis 20%igen Lösung oder Dispersion in Formationswasser con carboximethylierten Oxethylaten der Formel

$$R-(OCH_2CH_2)_n-OCH_2-COOM,$$

in der R einen linearen oder verzweigten aliphatischen Rest mit 4 bis 20 Kohlenstoffatomen oder einen alkylaromatischen Rest mit 1 bis 14 Kohlenstoffatomen in der Alkylgruppe, n 3 bis 30 und M ein Alkali- oder Erdalkali-Metallion oder Ammonium bedeutet und der Carboxymethylierungsgrad unvollständig ist, in eine Injektionsbohrung, dadurch gekennzeichnet, daß das Tensid so ausgewählt wird, daß die Phasen-Inversions-Temperatur des Systems Rohöl/Formationswasser/Tensid/ gegebenenfalls Zusätze 0 bis 10° C oberhalb der Lagerstättentemperatur liegt und daß das Tensid einen Carboximethylierungsgrad zwischen 10 und 90% hat.

2. Verfahren nach Anspruch 1, dadurch gekennzeichnet, daß die Phasen-Inversions-Temperatur des Systems Rohöl/Formationswasser/Tensid/gegebenenfalls Zusätze 1 bis 5° C oberhalb der Lagerstättentemperatur liegt.

3. Verfahren nach den Ansprüchen 1 und 2, dadurch gekennzeichnet, daß als Zusätze in Formationswasser lösliche Erdalkalisalze verwendet werden.

4. Verfahren nach den Ansprüchen 1 bis 3, dadurch gekennzeichnet, daß vor dem Einpressen der Tensidlösung 0,01 bis 4 PV Formationswasser in die Lagerstätte eingepreßt wird.

5. Verfahren nach den Ansprüchen 1 bis 4, dadurch gekennzeichnet, daß nach dem Einpressen der

Tensidlösung 0,01 bis 4 PV Formationswasser in die Lagerstätte eingepreßt wird.

6. Verfahren nach Anspruch 5, dadurch gekennzeichnet, daß das Formationswasser ein viskositätserhöhendes Polymer enthält.

7. Verfahren nach den Ansprüchen 1 bis 6, dadurch gekennzeichnet, daß das Tensid einen Carboximethylierungsgrad zwischen 30 und 90% hat.

**Claims**

1. A process for recovering largely emulsion-free oil from an underground deposit of medium or high salinity by forcing into an injection bore a 1 to 20% solution or dispersion in formation water of a carboxymethylated oxyethylate surfactant of the formula

$$R-(OCH_2CH_2)_n-OCH_2-COOM$$

where R is a linear or branched aliphatic radical of 4 to 20 carbon atoms or an alkylaromatic radical of 1 to 14 carbon atoms in the alkyl moiety, n is 3 to 30 and M is an alkali metal, alkaline earth metal or ammonium ion and the degree of carboxymethylation is incomplete, characterised in that the surfactant is selected so that the phase inversion temperature of the crude oil/formation water/surfactant/optional additives system is 0 to 10° C above the temperature of the deposit and the surfactant has a degree of carboxymethylation between 10 and 90%.

2. A process according to claim 1, characterised in that the phase inversion temperature of the crude oil/formation water/surfactant/optional additives system is 1 to 5° C above the temperature of the deposit.

3. A process according to claim 1 or 2, characterised in that an alkaline earth metal salt soluble in formation water is used as additive.

4. A process according to any of claims 1 to 3, characterised in that 0.01 to 4 pore volumes of formation water are forced into the deposit before the surfactant solution is forced in.

5. A process according to any of claims 1 to 3, characterised in that 0.01 to 4 pore volumes of formation water are forced into the deposit after the surfactant solution is forced in.

6. A process according to claim 5, characterised in that the formation water contains a viscosity-enhancing polymer.

7. A process according to any of claims 1 to 6, characterised in that the surfactant has a degree of carboxymethylation between 30 and 90%.

**Revendications**

1. Procédé pour extraire du pétrole largement exempt d'émulsion d'un gisement souterrain de salinité moyenne ou élevée, par injection dans un puits d'injection, d'une solution ou dispersion à 1 – 20%, dans de l'eau de formation, de produits d'oxéthylation carboxyméthylés de la formule:

$$R-(OCH_2CH_2)_n-OCH_2-COOM,$$

dans laquelle R représente un radical aliphatique linéaire ou ramifié comportant de 4 à 20 atomes de carbone ou un radical alkyl-aromatique comportant de 1 à 14 atomes de carbone dans le groupe alkyle, n a une valeur de 3 à 30 et M représente un ion de métal alcalin ou alcalino-terreux ou un ion ammonium et le degré de carboxyméthylation est incomplet, caractérisé par le fait que l'on sélectionne le surfactif de façon telle que la température d'inversion de phases du système pétrole brut/eau de formation/surfactif plus éventuellement additifs soit supérieure de zéro à 10° C à la température du gisement et que le surfactif ait un degré de carboxyméthylation compris entre 10 et 90%.

2. Procédé selon la revendication 1, caractérisé par le fait que la température d'inversion de phases du système pétrole brut/eau de formation/surfactif plus éventuellement additifs est supérieure de 1 à 5° C à la température du gisement.

3. Procédé selon les revendications 1 et 2, caractérisé par le fait que, comme additifs, on utilise des sels alcalino-terreux solubles dans l'eau de formation.

4. Procédé selon les revendications 1 à 3, caractérisé par le fait qu'avant l'injection de la solution de surfactif, on injecte dans le gisement 0,01 à 4 PV d'eau de formation.

5. Procédé selon les revendications 1 à 4, caractérisé par le fait qu'après l'injection de la solution de surfactif, on injecte dans le gisement 0,01 à 4 PV d'eau de formation.

6. Procédé selon la revendication 5, charactérisé par le fait que l'eau de formation contient un polymère élevant la viscosité.

7. Procédé selon les revendications 1 à 6, caractérisé par le fait que le surfactif a un degré de carboxyméthylation compris entre 30 et 90%.

Abb.1

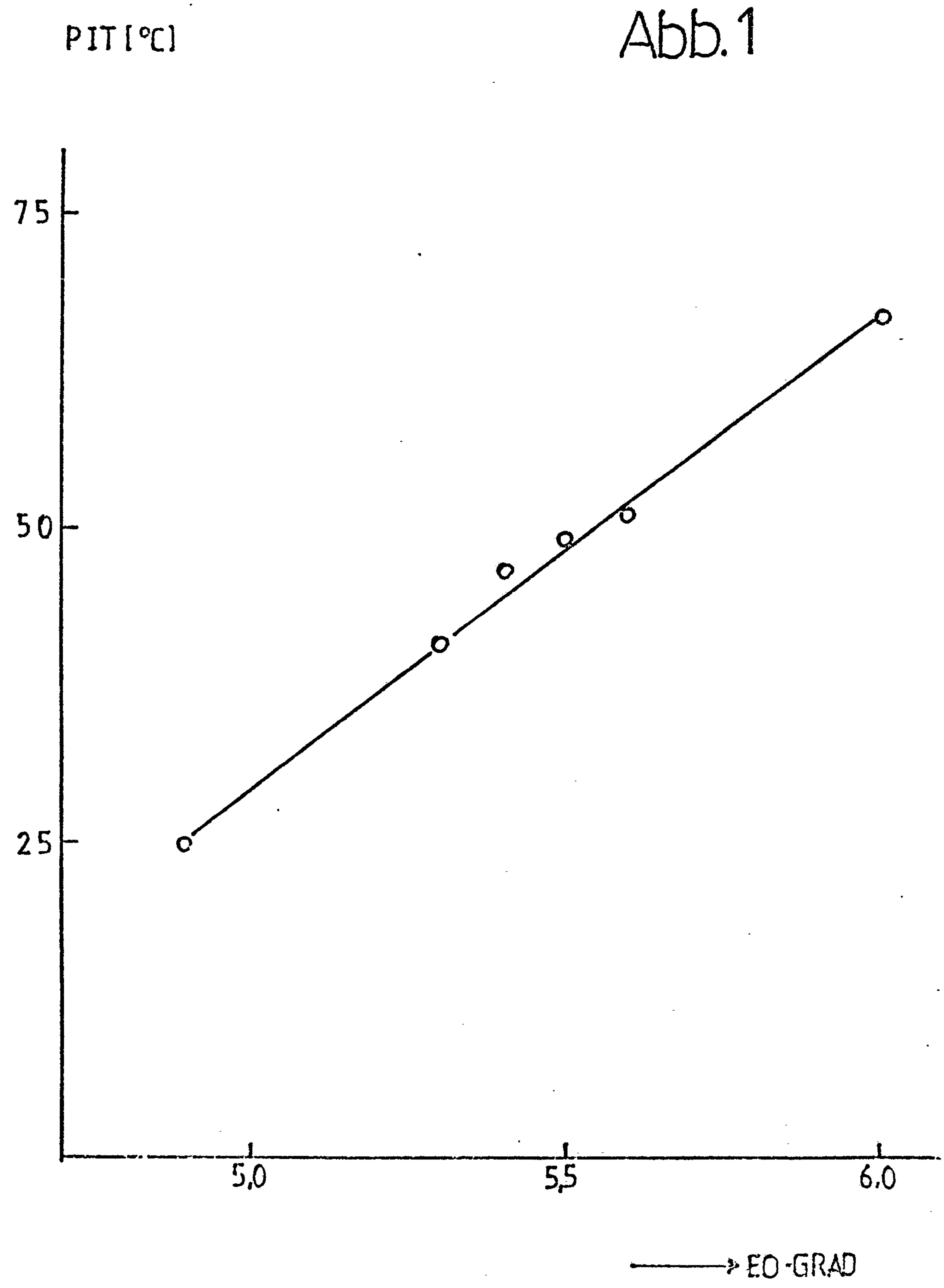

Abb.2